# EUROPÄISCHE PATENTSCHRIFT

(11) **EP 0 937 569 B1**
(45) Veröffentlichungstag und Bekanntmachung des Hinweises auf die Patenterteilung: **27.06.2001**
(21) Anmeldenummer: 99101870.6
(22) Anmeldetag: 28.01.1999
(51) Int. Cl.: B29C 51/26, G05B 19/00

(54) **Verfahren zum Steuern einer Vorrichtung zum Verformen von Folien oder Platten aus thermoplastischem Kunststoff und Vorrichtung zur Durchführung des Verfahrens**
Process for controlling an apparatus for thermoforming sheets or boards made from thermoplastic material and apparatus for performing said process
Procédé pour controller un appareil de thermoformage de feuilles ou plaques en matériau thermoplastique et appareil pour réaliser ledit procédé

(30) Priorität: 18.02.1998 DE 19806757
(43) Veröffentlichungstag der Anmeldung: 25.08.1999
(73) Patentinhaber: Illig, Adolf Maschinenbau GmbH & Co., 74081 Heilbronn (DE)
(72) Erfinder: Karbach, Helmut, 74078 Heilbronn-Frankenbach (DE)

(56) Entgegenhaltungen:
- EP-A- 0 673 766
- DE-A- 3 504 578
- DE-U- 29 710 552

## Beschreibung

Die Erfindung betrifft ein Verfahren zum Steuern einer Vorrichtung zum Verformen von Folien oder Platten aus thermoplastischem Kunststoff nach der Gattung des Hauptanspruches sowie eine Vorrichtung zur Durchführung des Verfahrens.

Aus dem deutschen Gebrauchsmuster 297 10 552 ist es bekannt, einen Bedienstand vor verschiedene Stationen bei einer Vorrichtung zum Verformen einer Folienbahn zu führen, in dem dieser verschiebbar an Längsträgern gehalten ist. Über die Art der Steuerung sagt diese Schrift nichts aus. Bekannterweise werden heute in diese Bedienstände Bedienfelder mit Bildschirm eingebaut, wie sie z. B. von Siemens unter der Bezeichnung OP 35 angeboten werden. Die Maschinensteuerung kann über bestimmte Bildschirmmasken angesprochen werden, über die Tastatur sind Maschinendaten eingebbar oder Funktionen auslösbar, Maschinendaten werden angezeigt. Die einzelnen Bildschirmmasken können über eine bestimmte Struktur aufgerufen werden. Auf oberster Ebene gibt es z. B. eine Bildschirmmaske für die Auswahl zwischen Betriebsarten - Temperaturen - Datenverwaltung - Maschineneinstellungen - Service. In der nächsten Ebene werden dann z. B. die Temperaturen der einzelnen Heizungen angezeigt. Hier wird ggf. auf eine weitere untere Ebene für Oberheizung/Unterheizung verzweigt. In den Masken werden die SOLL/IST-Temperaturen angezeigt und ggf. die zu regelnden Temperaturen vorgegeben.

Eine Vorrichtung zum Verformen von Folien oder Platten aus erwärmtem thermoplastischem Kunststoff hat mehrere Stationen in Durchlaufrichtung der Folienbahn bzw. Platten hintereinander angeordnet, z. B. Rollenaufnahme/Plattenstapel, Heizung, Formstation, Stanzstation, Stapelstation. Nach dem Umrüsten der Vorrichtung auf ein neues Produkt, das meist auch eine andere Folienbahn bedingt, müssen verschiedene Parameter nach dem Anfahren der Vorrichtung während des Betriebes verändert werden, um optimale Behälter zu erhalten. So ist es erforderlich, die genaue Heizungseinstellung der einzelnen Strahlerreihen zu finden, um in Abhängigkeit der Taktzeit und damit der Heizzeit ein gleichmäßiges Beheizen der Folienbahn über die gesamte Breite zu erreichen. Dies ist nur während des Produzierens möglich, um die Auswirkungen einer Veränderung erkennen zu können. Ist die Vorrichtung mit einer separaten Stanzstation ausgerüstet, besteht die Notwendigkeit, die Lage des Schneidwerkzeuges so einzustellen, daß der Schnitt an der richtigen Stelle zum Folienband mit eingeformten Tiefziehbehältern erfolgt. Bedingt durch den Folienschrumpf - die Folienbahn kühlt sich ab während des Transportes - kann die genaue Lage auch nur während der Produktion eingestellt werden. Gleiches betrifft die Lage der Stapelstation, die auch wieder vom Folienschrumpf beeinflußt wird. In der Formstation haben Parameter wie Formdruck und Zeitpunkt des Streckhelfereinsatzes relativ zum Zeitpunkt der Formluftzufuhr Auswirkungen auf die Qualität der tiefgezogenen Behälter. Die Bedienungsperson muß sich folglich beim Start der Maschine zu verschiedenen Stationen begeben, um Werte eingeben oder korrigieren zu können.

Bei den bekannten Verfahren ist es dazu erforderlich, nach einem Verschieben des Bedienstandes zu einer anderen Station sich entsprechend der Struktur der Bildschirmmasken zu der für diese Station gültige Maske durchzutippen. Zumindest ist es erforderlich - wenn man diese auswendig weiß - eine Seitennummer am Bedienfeld einzugeben, die die gewünschte Bildschirmmaske anzeigt. Beides ist zeitaufwendig und verlängert damit den Anfahrprozeß der Vorrichtung, was zusätzlich vermehrten Materialausschuß zur Folge hat.

Der Erfindung liegt die Aufgabe zugrunde, das Verfahren so zu verbessern, daß die Bedienung vereinfacht und beschleunigt wird, so daß der Anfahrvorgang rascher vorgenommen werden kann und weniger Ausschuß entsteht. Auch während der Produktion sollten rasch Maschinendaten kontrolliert und ggf. angepaßt werden können.

Zur Lösung der Erfindung werden die Merkmale des Hauptanspruches vorgeschlagen. Durch das automatische Aktivieren von stationsbezogenen Bildschirmmasken werden die genannten Nachteile vermieden.

Die Unteransprüche betreffen vorteilhafte Weiterbildungen des Verfahrensablaufes und die Vorrichtung zur Durchführung des Verfahrens. Verfahren und Vorrichtung sind anhand der schematischen Zeichnungen näher beschrieben. Es zeigt:
- Figur 1 -: eine Längsdarstellung der Vorrichtung zur Durchführung des Verfahrens

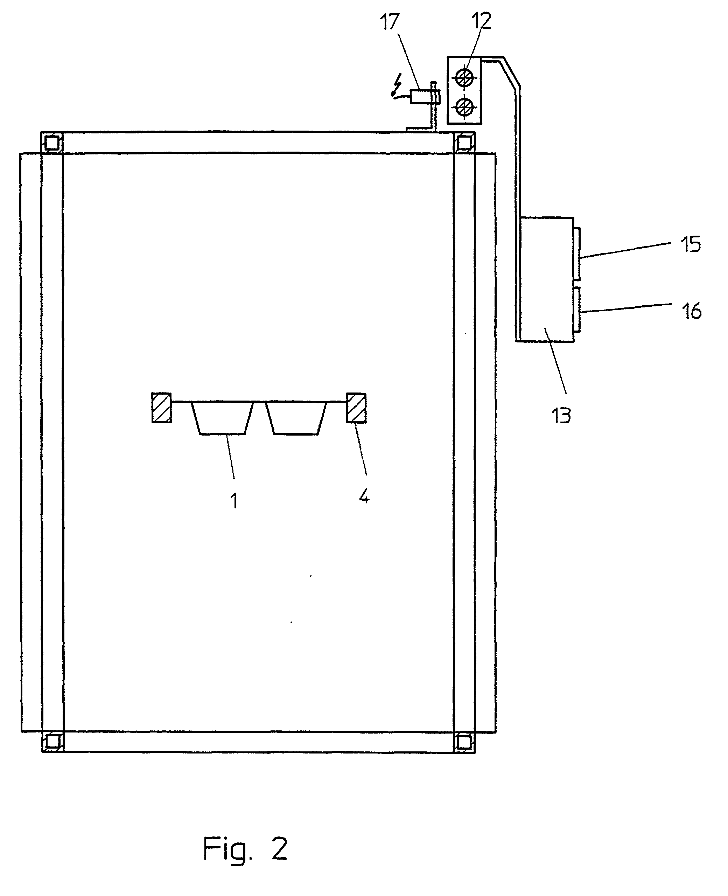

- Figur 2 -: einen Querschnitt durch die Vorrichtung
- Figur 3 -: eine Ansicht des Bedienstandes mit Bildschirmmaske und Tastatur.

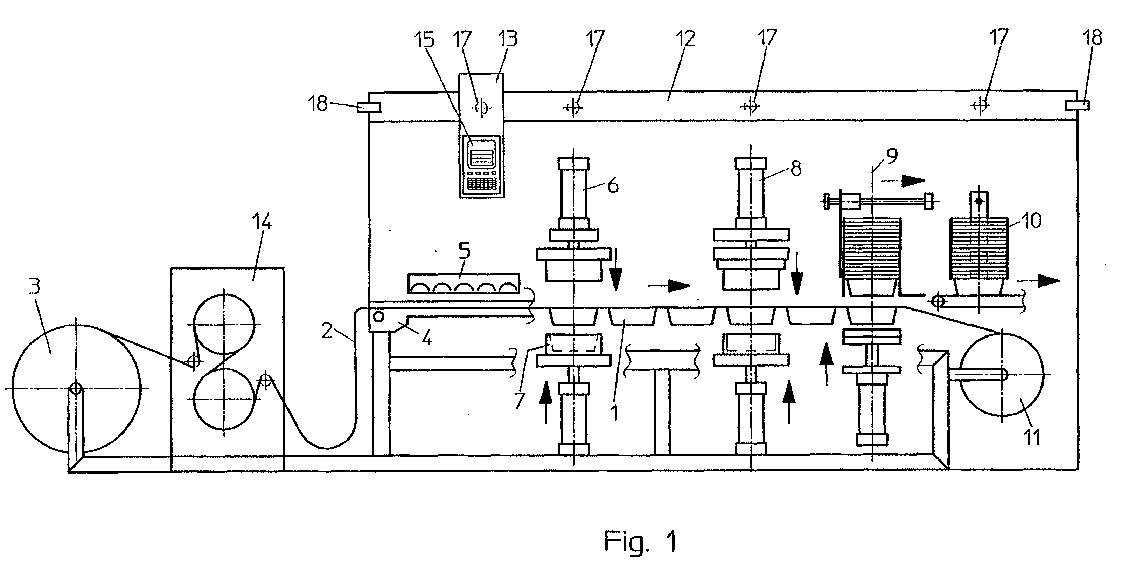

Figur 1 zeigt eine Vorrichtung zum Herstellen von Formteilen 1 aus einer Folienbahn 2 aus thermoplastischem Kunststoff, die von der Rolle 3 von einer Transporteinrichtung 4 durch die Vorrichtung intermittierend transportiert wird. Eine Heizung 5 beheizt die Folienbahn 2, bevor sie in einer Formstation 6 mittels Differenzdruck durch eine Form 7 tiefgezogen wird. In der nachfolgenden Stanzstation 8 werden die Formteile 1 ausgestanzt, in der Stapelstation 9 gestapelt und als Stapel 10 ausgeschoben. Die Restfolie wird zu einer Rolle 11 aufgewickelt.

Anstelle der Folienbahn .2 können auch Platten vom Stapel zugeführt und von der Transporteinrichtung 4 taktweise von Station zu Station transportiert werden.

Die Vorrichtung ist bei Verarbeitung einer Folienbahn 2 abwandelbar in eine Verpackungsmaschine, wenn nach der Formstation 6 eine Füllstrecke und eine Siegelstation für eine Deckfolie angeordnet werden. Die Stanzstation 8 trennt dann fertige Kunststoffverpackungen aus, die in der Regel über ein Förderband die Vorrichtung verlassen.

Der Vorrichtung können Zusatzeinrichtungen wie eine Vorheizung 14, Ionisiergeräte oder Sterilisationseinrichtungen vorgeschaltet sein. Genauso ist es möglich, Zusatzaggregate wie Mühlen, Etikettiergeräte, Bördeleinrichtungen nachzuschalten. Diese können steuerungstechnisch mit der zentralen Maschinensteuerung der Vorrichtung ganz oder teilweise gekoppelt sein.

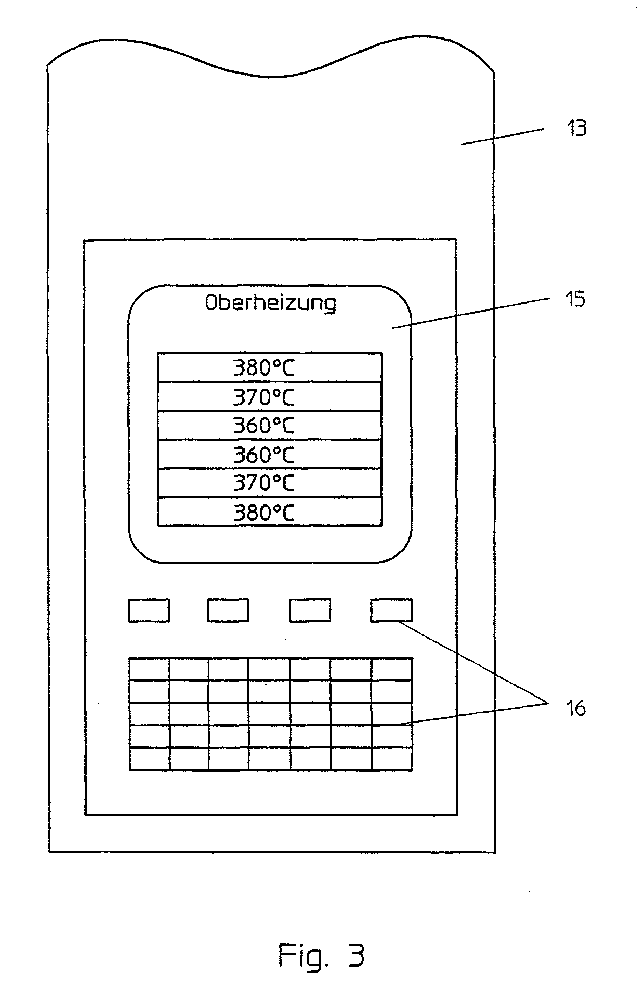

An Führungen 12 kann ein Bedienstand 13 horizontal verschoben werden vor alle Stationen der Vorrichtung. Dieser Bedienstand 13 steht mit der zentralen Maschinensteuerung in Verbindung und besteht - siehe Figur 3 - aus einem Bildschirm 15 und einem Tastenfeld 16. Im einfachsten Fall weist der Bildschirm 15 nur ein Zeilendisplay für 1 bis 10 Zeilen auf. Komfortabler ist ein Bildschirm mit freier Konfigurierbarkeit einzelner Masken, die funktionsbezogen oder stationsbezogen aufgebaut sein können. So können z. B. die Temperaturen aller Stationen (Strahlertemperaturen, Werkzeugtemperatur, Bandstahltemperatur) auf einer Bildschirmmaske dargestellt sein. Oder es werden z. B. alle Maschinendaten der Stanzstation 8 auf einer Bildschirmmaske dargestellt (Stanzhub, Lage, Geschwindigkeit, Bandstahltemperatur).

Am Tastenfeld 16 können Maschinendaten eingegeben und verändert werden. Das Blättern zu einzelnen Bildschirmmasken ist möglich, entweder über einen Menübaum oder durch Eingabe einer Seitennummer.

Gemäß der Erfindung weist die Vorrichtung eine Einrichtung auf, mit der die Lage des Bedienstandes 13 entweder jederzeit oder an vorgegebenen Stellen erfaßt und der Maschinensteuerung gemeldet wird. Für den ersteren Fall ist ein Wegmeßsystem vorzusehen, das aber relativ teuer ist. Einfacher und ausreichend ist die Erfassung der Bedienstandslage über Sensoren 17 an jeder gewünschten Station. Sensoren 18 an der linken bzw. rechten Seite der Vorrichtung sind angebracht, wenn vor- bzw. nachgeschaltete Zusatzeinrichtungen, die mit der Steuerung der Vorrichtung verbunden sind, angesprochen werden sollen.

In der Regel hat die Vorrichtung verschiedene Betriebsarten, z. B. Handfunktionen - Automatik - Umrüsten - Leerfahren etc. Die Betriebsart kann ebenfalls am Bildschirm 15 vorgewählt und gestartet werden.

Das Verfahren läuft wie folgt ab.

Wurde die Vorrichtung gestartet, führt die Bedienungsperson den Bedienstand 13 an die Stelle der Vorrichtung, an der sie Beobachtungen und ggf. Korrekturen/Eingaben tätigen will. Wird das Erreichen einer Station über den Sensor 17 der Maschinensteuerung gemeldet, wird die Bildschirmmaske aktiviert, die der erreichten Station entspricht. Dies wird in der Regel eine Bildschirmmaske des Strukturbaumes sein, die man bisher von Hand anwählen mußte. Es kann sich aber auch um eine individuelle Maske für die einzelnen Stationen handeln, die immer und nur über den Sensor 17 aktiviert wird. Beispiel: Für die Stanzstation 8 wird eine Bildschirmmaske dargestellt, die Werte für alle 3 Betriebsarten dieser Station darstellt. Beeinflussen könnte man natürlich nur die für die gerade anstehende Betriebsart möglichen Maschinendaten. Oder man zeigt nur die Werte und Eingabefelder an, die für die gerade anstehende Betriebsart gültig sind.

Aktivieren einer Bildschirmmaske bedeutet in der Regel, daß man diese gleich anzeigt. Das Verfahren kann aber auch so ausgeführt werden, daß die Anzeige erst nach einem Betätigen einer Taste/eines Sensors im Tastenfeld 16 erfolgt und bis dahin die bisherige Bildschirmmaske angezeigt bleibt.

Auch wird das Verfahren vorzugsweise so ausgebildet, daß das Erreichen eines Sensors 17 die entsprechende Bildschirmmaske aktiviert und beim Weiterfahren des Bedienstandes 13 diese Aktivierung/Anzeige so lange ansteht, bis ein benachbarter Sensor 17 bzw. 18 erreicht wird und erst dann umschaltet.

Beim Anfahren eines Sensors 18 am Beginn bzw. am Ende der Vorrichtung kann dessen Signal dazu verwendet werden, die Bildschirmmaske vorgeschalteter bzw. nachgeschalteter Zusatzeinrichtungen, wie z. B. die einer Vorheizung 14, zu aktivieren, so daß z. B. deren Temperatur angezeigt wird und verändert werden kann.

Prinzipiell ist es möglich, die automatische Aktivierung von Bildschirmmasken zu- bzw. abschaltbar durch eine entsprechende Vorwahl in der Steuerung festzulegen. Die Bedienungsperson kann also für bestimmte Arbeiten die automatische Umschaltung der Bildschirmmasken unterbinden.

Je nach Umfang der stationsbezogenen Maschinendaten kann es erforderlich sein, diese auf zwei oder mehreren Seiten unterzubringen. So kann die Temperaturanzeige von Oberheizung und Unterheizung in einer Heizstation zwei Seiten erfordern. In diesem Fall wird vorgesehen, das Verfahren so auszuführen, daß eine Seite automatisch aktiviert wird, die nachfolgende Seite durch einfachen Tastendruck direkt aufgerufen werden kann.

## Patentansprüche

1. Verfahren zum Steuern einer aus mehreren Stationen bestehenden Vorrichtung zum Verformen einer erwärmten Folie oder Platte aus thermoplastischem Kunststoff mittels Differenzdruck zu Formteilen mit einem vor oder in der Nähe der einzelnen Stationen führbaren Bedienstand zur Steuerung der Vorrichtung, dadurch gekennzeichnet, daß die Stellung des Bedienstandes (13) erfaßt und in Abhängigkeit seiner Stellung eine in der Maschinensteuerung definierte Bildschirmmaske des Bildschirmes (15) aktiviert wird.

2. Verfahren nach Anspruch 1 dadurch gekennzeichnet, daß die aktivierte Bildschirmmaske sofort angezeigt wird.

3. Verfahren nach Anspruch 1 dadurch gekennzeichnet, daß die aktivierte Bildschirmmaske nach Betätigung eines Tasters/Sensors angezeigt wird.

4. Verfahren nach einem der Ansprüche 1 bis 3 dadurch gekennzeichnet, daß die Bildschirmmaske in Abhängigkeit der anstehenden Betriebsart der Thermoformmaschine aktiviert wird.

5. Verfahren nach einem der Ansprüche 1 bis 4 dadurch gekennzeichnet, daß auch eine Bildschirmmaske zur Steuerung von vor/nachgeschalteten Einheiten der Vorrichtung in bestimmter Lage des Bedienstandes (13) aktiviert wird, wenn die Steuerung dieser Einheiten mit der Steuerung der Vorrichtung verbunden ist.

6. Verfahren nach einem der Ansprüche 1 bis 5 dadurch gekennzeichnet, daß die Aktivierung einer Bildschirmmaske so lange ansteht, bis der Bedienstand (13) zu einer benachbarten Station geführt wird, in der eine Aktivierung einer entsprechenden Bildschirmmaske erfolgt.

7. Verfahren nach einem der Ansprüche 1 bis 6 dadurch gekennzeichnet, daß die Erfassung der Stellung des Bedienstandes (13) über einen Sensor (17, 18) erfolgt.

8. Verfahren nach einem der Ansprüche 1 bis 6 dadurch gekennzeichnet, daß die Erfassung der Stellung des Bedienstandes (13) über ein Wegmeßsystem erfolgt.

9. Verfahren nach einem der Ansprüche 1 bis 8 dadurch gekennzeichnet, daß die Aktivierung der stationsbezogenen Bildschirmmasken zu- bzw. abschaltbar ausgeführt ist.

10. Verfahren nach einem der Ansprüche 1 bis 9 dadurch gekennzeichnet, daß bei Vorhandensein von mehereren Seiten von stationsbezogenen Bildschirmmasken die erste Bildschirmmaske aktiviert und die nachfolgenden Seiten über Drucktaster nacheinander aufrufbar sind.

11. Verfahren nach einem der Ansprüche 1 bis 10 dadurch gekennzeichnet, daß spezielle Bildschirmmasken für die stationsbezogene Anzeige vorgesehen sind.

12. Vorrichtung zum Verformen einer erwärmten Folie oder Platte aus thermoplastischem Kunststoff mit mehreren Stationen und einem vor oder in die Nähe der Stationen führbaren Bedienstand, gekennzeichnet durch eine Einrichtung zur Erfassung der Stellung des Bedienstandes (13), die mit der Maschinensteuerung in der Weise verbunden ist, daß je nach Stellung des Bedienstandes (13) eine entsprechende Bildschirmmaske aktiviert wird.

13. Vorrichtung nach Anspruch 12 dadurch gekennzeichnet, daß als Einrichtung zur Erfassung der Stellung des Bedienstandes (13) Sensoren (17, 18) angeordnet sind.

14. Vorrichtung nach Anspruch 12 dadurch gekennzeichnet, daß als Einrichtung zur Erfassung der Stellung des Bedienstandes (13) ein Wegmeßsystem angeordnet ist.

## Claims

1. Method of controlling a device, which consists of several stations, for shaping a heated foil or plate of thermoplastic synthetic material by means of differential pressure into moulded articles, with a control unit for controlling the device and movable in front of or into the vicinity of the individual stations, characterised in that the position of the control unit (13) is detected and in dependence on the setting thereof a screen mask, which is defined in the machine control, of the screen (15) is activated.

2. Method according to claim 1, characterised in that the activated screen mask is displayed immediately.

3. Method according to claim 1, characterised in that the activated screen mask is displayed after actuation of a detector/sensor.

4. Method according to one of claims 1 to 3, characterised in that the screen mask is activated in dependence on the impending operational mode of the thermomoulding machine.

5. Method according to one of claims 1 to 4, characterised in that a screen mask for controlling upstream or downstream units of the device is also activated in a specific position of the control unit (13) when the control of these units is connected with the control of the device.

6. Method according to one of claims 1 to 5, characterised in that the activation of a screen mask is deferred until the control unit (13) is moved to an adjacent station in which activation of a corresponding screen mask takes place.

7. Method according to one of claims 1 to 6, characterised in that the detection of the position of the control unit (13) is carried out by way of a sensor (17, 18).

8. Method according to one of claims 1 to 6, characterised in that the detection of the position of the control unit (13) is carried out by way of a travel measuring system.

9. Method according to one of claims 1 to 8, characterised in that the activation of the screen masks related to station is designed to be switchable on and off.

10. Method according to one of claims 1 to 9, characterised in that in the presence of several pages of station-related screen masks the first screen mask is activated and the succeeding pages can be called up in succession by pushbuttons.

11. Method according to one of claims 1 to 10, characterised in that special screen masks for the station-related displays are provided.

12. Device for shaping a heated foil or plate of thermoplastic synthetic material, comprising several stations and a control unit movable in front of or into the vicinity of the stations, characterised by a device for detecting the position of the control unit (13), which is connected with the machine control in the manner that a corresponding screen mask is activated in accordance with the position of the control unit (13).

13. Device according to claim 12, characterised in that sensors (17, 18) are arranged as the device for detection of the position of the control stand (13).

14. Device according to claim 12, characterised in that a travel measuring system is arranged as the device for detection of the position of the control stand (13).

## Revendications

1. Procédé de commande d'un dispositif composé d'un ou plusieurs postes de thermoformage d'une bande de film ou d'une plaque, préchauffées, de matière thermoplastique, par une différence de pression, pour obtenir des pièces thermo-formées, à l'aide d'un poste de commande qui peut être amené devant ou à proximité des différents postes, pour commander le dispositif,
caractérisé en ce qu'
on saisit la position du poste de commande (13) et, en fonction de sa position, on active un masque d'écran de l'écran-image (15), ce masque étant défini dans la commande des machines.

2. Procédé selon la revendication 1,
caractérisé en ce que
le masque d'écran, activé, s'affiche immédiatement.

3. Procédé selon la revendication 1,
caractérisé en ce que le masque d'écran, activé, s'affiche après actionnement d'un capteur/détecteur.

4. Procédé selon l'une quelconque des revendications 1 à 3,
caractérisé en ce que le masque d'écran est activé selon le mode de fonctionnement en cours de la machine de thermoformage.

5. Procédé selon l'une quelconque des revendications 1 à 4,
caractérisé en ce qu'
on active également un masque d'écran pour commander des unités en amont/aval du dispositif, dans une certaine position du poste de commande (13), si la commande de ces unités est liée à la commande du dispositif.

6. Procédé selon l'une quelconque des revendications 1 à 5,
caractérisé en ce que
l'activation d'un masque d'écran reste en cours jusqu'à ce que le poste de commande (13) soit amené à un poste voisin dans lequel est activé un masque d'écran correspondant.

7. Procédé selon l'une quelconque des revendications 1 à 6,
caractérisé en ce que
la saisie de la position du poste de commande (13) se fait par l'intermédiaire d'un capteur (17, 18).

8. Procédé selon l'une quelconque des revendications 1 à 6,
caractérisé en ce que
la saisie de la position du poste de commande (13) se fait par l'intermédiaire d'un système de mesure de déplacement.

9. Procédé selon l'une quelconque des revendications 1 à 8,
caractérisé en ce que
l'activation des masques d'écran liés aux stations se fait par mise en marche/arrêt.

10. Procédé selon l'une quelconque des revendications 1 à 9,
caractérisé en ce que
dans le cas de plusieurs pages de masques d'écran liés à une station, le premier masque d'écran est activé et les pages suivantes peuvent être appelées par des touches.

11. Procédé selon l'une quelconque des revendications 1 à 10,
caractérisé par
des masques d'écran particuliers pour l'affichage lié à un poste.

12. Dispositif de thermoformage d'une feuille ou d'une plaque chauffées en matière thermoplastique, comprenant plusieurs stations et un poste de commande qui peut être amené devant ou à proximité des postes,
caractérisé par
une installation de saisie de la position du poste de commande (13), cette installation étant liée à la commande des machines de façon que, suivant la position du poste de commande (13), un masque d'écran correspondant soit activé.

13. Dispositif selon la revendication 12,
caractérisé en ce que
l'installation pour saisir la position du poste de commande (13) comprend des capteurs (17, 18).

14. Dispositif selon la revendication 12,
caractérisé en ce que
l'installation de saisie de la position du poste de commande (13) est un système de mesure de déplacement.
